# EUROPÄISCHE PATENTSCHRIFT

(11) **EP 2 912 948 B1**
(45) Veröffentlichungstag und Bekanntmachung des Hinweises auf die Patenterteilung: **10.05.2017**
(21) Anmeldenummer: 15157049.6
(22) Anmeldetag: 14.03.2012
(51) Int. Cl.: A23F 3/14, A23F 3/34, B65D 85/804

(54) **PORTIONSKAPSEL ZUR HERSTELLUNG EINES GETRÄNKS**
PORTION CAPSULE FOR PRODUCING A BEVERAGE
CAPSULE DE FABRICATION D'UNE BOISSON

(30) Priorität: 14.03.2011 DE 102011013962
(43) Veröffentlichungstag der Anmeldung: 02.09.2015
(62) Teilanmeldung aus: 12712931.0
(73) Patentinhaber: K-fee System GmbH, 51469 Bergisch Gladbach (DE)
(72) Erfinder: Krüger, Marc, 51467 Bergisch-Gladbach (DE); Empl, Günter, 51429 Bergisch Gladbach (DE); Eppler, Wolfgang, 51465 Bergisch Gladbach (DE)
(74) Vertreter: Loock, Jan Pieter

(56) Entgegenhaltungen:
- WO-A1-99/58035
- WO-A1-2009/114119
- WO-A1-2009/130311

## Beschreibung

### Stand der Technik

Die vorliegende Erfindung betrifft eine Portionskapsel zur Herstellung eines Teegetränks, wobei eine Getränkesubstanz zur Aufbewahrung in der Portionskapsel und zum Aufbrühen

in der Portionskapsel mittels in die Portionskapsel unter Druck eingeleitetem Heißwasser vorgesehen ist und wobei die Getränkesubstanz im Wesentlichen granulatförmig ausgebildet ist und zumindest teilweise Tee umfasst.

Solche Getränkesubstanzen sind allgemein bekannt und werden häufig in Portionskapsel gefüllt. Beispielsweise ist aus der Druckschrift FR 2 556 323 A1 eine Portionskapsel zur Herstellung eines Getränks bekannt, welche ein im Wesentlichen kegelstumpfförmiges oder zylindrisches Basiselement, welches einen Hohlraum aufweist, und eine den Hohlraum verschließende Membran aufweist, wobei innerhalb des Hohlraums ein Filterelement angeordnet ist, welches den Hohlraum in einen ersten Bereich zur Aufnahme der Getränkesubstanz und in einen zweiten Bereich zur Aufnahme eines Getränkeextrakts unterteilt. Die Getränkesubstanz umfasst hier allerdings ein Kaffeepulver. Die Portionskapsel wird daher zur Herstellung eines Kaffeegetränks verwendet. Zur Herstellung des Getränks wird die Portionskapsel in einer Brühkammer einer Brühkammermaschine angeordnet, in welcher die Membran perforiert und eine Extraktionsflüssigkeit, insbesondere heißes Wasser in den ersten Bereich eingebracht wird. Die Getränkesubstanz wird während eines Extraktionsvorgangs von der Extraktionsflüssigkeit durchströmt, so dass ein Getränkeextrakt, hier ein Kaffeegetränk gebildet wird, welches durch Filteröffnungen im Filterelement hindurch in den zweiten Bereich des Hohlraums gelangt. Durch die Siebfunktion des Filterelements wird die Getränkesubstanz daran gehindert, ebenfalls in den zweiten Bereich zu gelangen. In der Brühkammer wird ferner ein Bodenbereich der Portionskapsel perforiert, so dass das Getränkeextrakt die Portionskapsel verlassen und gegebenenfalls in ein Getränkegefäß, wie beispielsweise eine Kaffeetasse gelangen kann.

Darüberhinaus ist bekannt, derartige mit einer Teesubstanz gefüllte Portionskapsel zu verwenden, um in analoger Weise ein Teegetränk mittels der Brühkammermaschine herzustellen. Eine solche Portionskapsel, die mit Tee befüllt sein kann, ist beispielsweise aus der Druckschrift WO 2009 / 114 119 A1 bekannt.

Hierbei besteht jedoch das Problem, dass in einer vergleichsweise kurzen Aufbrühzeit ein qualitativ hochwertiges Teegetränk bereitgestellt werden muss. Der Benutzer solcher Brühkammermaschinen ist daran gewöhnt innerhalb von maximal 1 bis 1,5 Minuten ein fertiges Getränks bereitgestellt zu bekommen. Die bekannten Brühkammermaschinen können ferner in der Regel höchstens für 60 bis 90 Sekunden der Portionskapsel heißes Brühwasser zuführen. Um eine Tasse Tee herzustellen muss das Brühwasser vergleichsweise schnell durch das Volumen der Portionskapsel gepumpt werden. Die Wechselwirkungszeit zwischen der Teesubstanz und dem Brühwasser ist daher vergleichsweise kurz und insbesondere deutlich kürzer als bei einem klassischen bzw. händischen Aufbrühvorgang einer klassischen Teegetränks. Die Qualität des mit einer Portionskapsel in einer Brühkammermaschine hergestellten Teegetränks ist daher vergleichsweise schlecht.

Es ist daher die Aufgabe der vorliegenden Erfindung, eine Portionskapsel zur Verfügung zu stellen, wodurch die Nachteile des Standes der Technik vermieden werden und ein effizienter, schneller und zuverlässiger Aufbrühvorgang zur Herstellung eines Teegetränks erzielt wird.

### Offenbarung der Erfindung

Die Aufgabe wird mit einer Portionskapsel nach Anspruch 1 gelöst, wobei die Getränkesubstanz zur Aufbewahrung in einer Portionskapsel und zum Aufbrühen in der Portionskapsel mittels in die Portionskapsel unter Druck eingeleitetem Heißwasser vorgesehen ist, wobei die Getränkesubstanz im Wesentlichen teilchenförmig ausgebildet ist und zumindest teilweise Tee umfasst und wobei die Getränkesubstanz eine durchschnittliche Teilchengröße zwischen 500 Mikrometer und 1500 Mikrometer aufweist. Die erfindungsgemäße Portionskapsel hat gegenüber dem Stand der Technik den Vorteil, dass ein deutlich effizienteres, schnelleres und saubereres Aufbrühen der Getränkesubstanz ermöglich wird. Die Teilchengrößen sind einerseits derart klein gewählt, dass die Getränkesubstanz eine große Oberfläche aufweist und hierdurch auch in einer vergleichsweise kurzen Brühzeit ein effizientes Aufbrühen des Tees mit einer guten Geschmacks- und Aromaentwicklung ermöglicht. Andererseits sind die Teilchengrößen derart groß gewählt, dass Getränkesubstrat in einfacher Weise aus dem erzeugten Teegetränk herauszufiltern sind und somit das einem Benutzer bereitgestellte Teegetränk nicht durch Getränkesubstrat verunreinigt und in seinem Geschmack beeinträchtigt wird. Der Begriff teilchenförmig ist im Sinne der vorliegenden Erfindung insbesondere gleichbedeutend mit granulatförmig. Die durchschnittliche Teilchengröße umfasst insbesondere den D_{4,3}-Wert (auch als mittlere Volumendurchmesser der Teilchen bezeichnet), wenn die Getränkesubstanz mit dem Malvern-Laserbeugungsverfahren vermessen wird. Für eine derartige Vermessung wurde insbesondere der Malvern Mastersizer 3000 mit Trockendispergierung Aero S, 4 bar Dispersionsdruck und einer Feed Rate von 60 bis 90 verwendet.

Gemäß einer bevorzugten Ausführungsform der vorliegenden Erfindung ist vorgesehen, dass die Getränkesubstanz eine durchschnittliche Teilchengröße D_{4,3}zwischen 650 Mikrometer und 1320 Mikrometer aufweist. Bevorzugt weist die Getränkesubstanz einen Anteil von Teilchen mit einer Teilchengröße größer als 500 Mikrometer auf, der zwischen 40 Prozent und 90 Prozent und vorzugsweise zwischen 50 und 80 Prozent liegt. Besonders bevorzugt weist die Getränkesubstanz einen Anteil von Teilchen mit einer Teilchengröße kleiner als 100 Mikrometer auf, der kleiner als 10 Prozent ist und vorzugsweise kleiner als 8 Prozent ist. Es hat sich in für den Fachmann überraschender und nicht zu erwartender Weise gezeigt, dass eine Getränkesubstanz mit einer derartigen Teilchenverteilung ein optimales Extraktionsverhalten zeigt. Insbesondere werden eine effiziente Extraktion und ein zufriedenstellendes Aroma bei einem im Vergleich zum Stand der Technik geringerem Einsatz von Teerohmaterial erzielt. Insbesondere wird hierdurch ein Extraktgehalt zwischen 1- 3 Prozent erzielt. Der Extraktgehalts gibt die prozentuale Menge der extrahierten Trockensubstanz an. Hierbei wird die Menge der bei der Zubereitung freigesetzten Stoffe aus den Pflanzenteilen, die nach dem Trocknen im Trockenschrank als Feststoff zurückbleiben durch die Menge der in der Kapsel vorhandenen Pflanzenteile dividiert. Das Ergebnis ist der Extraktgehalt in Prozent.

Gemäß einer bevorzugten Ausführungsform der vorliegenden Erfindung ist vorgesehen, dass die Getränkesubstanz ein spezifisches Quellvermögen zwischen 1,5 und 3 und insbesondere zwischen 1,0 und 2,6 aufweist. Das Quellvermögen umfasst insbesondere das spezifische Quellvermögen und wird als Quotient aus dem Volumen der trockenen Pflanzenteile und dem Volumen der nach dem Brühen gequollenen Pflanzenteile berechnet. Das definierte Quellvermögen ermöglich vorteilhafterweise eine optimale Brüheffizienz des Getränkesubstanz in der Portionskapsel. Insbesondere wird hierdurch eine Wasseraufnahme der Getränketeilchen während des Brühvorgangs erzielt, welche eine optimale Entfaltung des Teearomas gewährleistet.

Gemäß einer bevorzugten Ausführungsform der vorliegenden Erfindung ist vorgesehen, dass die Getränkesubstanz zur Keimreduktion thermisch vorbehandelt ist. Kräutertees unterliegen einer sehr schwankenden Keimbelastung. Vorrangiges Augenmerk wird auf Enterobacter (Salmonellen, coliforme Keime) gerichtet, da diese zu Magen-Darm-Verstimmungen bis hin zu sehr schweren, auch tödlich verlaufenden Erkrankungen führen können. Vorteilhafterweise wird die Getränkesubstanz daher thermisch vorbehandelt, um Enterobacter, aber auch Hefen und Schimmel zu reduzieren. Auch wenn das Wasser nicht kochend in die Kapsel einströmt, ist somit gewährleistet, dass die wenigen, noch vorhandenen Keime abgetötet werden und damit ein hygienisch einwandfreies Getränk hergestellt werden kann.

Offenbart wird auch eine Getränkesubstanz zur Herstellung eines Teegetränks, wobei die Getränkesubstanz zur Aufbewahrung in einer Portionskapsel und zum Aufbrühen in der Portionskapsel mittels in die Portionskapsel unter Druck eingeleitetem Heißwasser vorgesehen ist, wobei die Getränkesubstanz im Wesentlichen granulatförmig ausgebildet ist und zumindest teilweise Tee umfasst und wobei wenigstens 90 Prozent der Getränkesubstanz eine mittlere Teilchengröße zwischen 0,1 und 2 Millimetern aufweist.

Bevorzugt ist vorgesehen, dass mindestens 90 Prozent der Getränkesubstanz eine mittlere Teilchengröße zwischen 1 und 2 Millimetern aufweist. Das Herausfiltern von Getränkesubstrat aus dem Teegetränk ist hierbei besonders effizient, da nahezu alle Partikel im Filter hängenbleiben und gleichzeitig aber ein Verstopfen von einzelnen Filteröffnungen des Filters durch zu kleine Partikel verhindert wird. Im Sinne der vorliegenden Erfindung beziehen sich die Prozentangaben insbesondere auf die Massenanteile der Partikel, d.h. dass diejenigen Partikel der Getränkesubstanz die einen mittleren Teilchengröße zwischen 0,1 und 2 Millimetern aufweist, wenigstens 90 Prozent der Masse der Getränkesubstanz ausmachen. Im Sinne der vorliegenden Erfindung umfasst die Teilchengröße insbesondere den mittleren Teilchendurchmesser der Getränkesubstanz. Dieser wird vorzugsweise mittels einer Siebanalyse vermessen, bei welcher die Getränkesubstanz beispielsweise mittels eines Siebturms aus mehreren übereinander gestapelten Prüfsieben gesiebt wird. Die Maschenweiten der einzelnen Prüfsiebe nehmen dabei von oben nach unten ab. Bei der Durchführung der Siebanalyse wird die Getränkesubstanz auf das oberste Prüfsieb aufgegeben und anschließend einer definierten Schüttelbewegung ausgesetzt. Durch das Auswiegen der Rückstände auf den einzelnen Prüfsieben wird anschließend die Korngrößenverteilung der Getränkesubstanz ermittelt. Zur Herstellung der Getränkesubstanz werden beispielsweise Teeblätter, insbesondere nach dem Welken, Zerbrochen, Zerrissen und/oder gerollt (beispielsweise durch einen maschinellen CTC-Prozess: Crushing, Tearing, Curling), um die oben genannte gewünschte Teilchengröße bzw. Teilchengrößenverteilung zu erzielen. Denkbar ist ferner, dass gewelkte Teeblätter zerhackt, zerschnitten, zerbröselt oder dergleichen werden. Die Getränkesubstanz wird beispielsweise durch das genannte CTC-Verfahren hergestellt, anschließend die Teilchengrößenverteilung mit dem oben genannten Siebanalyseverfahren vermessen und anhand der erzielten Analyseergebnisse entschieden, ob weitere Zerkleinerungsschritte notwendig sind oder ob die gewünschte Teilchengrößenverteilung bereits vorliegt.

Vorteilhafte Ausgestaltungen und Weiterbildungen der Erfindung sind den Unteransprüchen, sowie der Beschreibung unter Bezugnahme auf die Zeichnungen zu entnehmen.

Gemäß einer bevorzugten Ausführungsform der vorliegenden Erfindung ist vorgesehen, dass die Getränkesubstanz eine Schaumbremse umfasst. Vorteilhafterweise wird mittels der Schaumbremse ein zu starkes Aufschäumen der Getränkesubstanz während bzw. nach dem Aufbrühvorgang verhindert. Insbesondere beim Verlassen der Portionskapsel wird das Teegetränk stark verwirbelt, wodurch sich große Schaumblasen bilden. Diese erschweren das ordentliche Einfüllen des Teegetränks in einen Auffangbehälter, wie eine Tasse oder Kanne. Die Schaumbremse umfasst insbesondere hydrobphobe, pflanzliche Bestandteile. In einer bevorzugten Ausführungsform umfasst die Schaumbremse ein Pflanzenöl. Das Pflanzenöl wird vorzugsweise auf ein Teegranulat aufgesprüht, welches anschließend in die Portionskapsel gefüllt wird. In überraschender und nicht vorhersehbarer Weise hat sich gezeigt, dass bei einem Anteil der Schaumbremse von maximal 5 Prozent, bevorzugt maximal 2 Prozent und besonders bevorzugt maximal 1,5 Prozent an der Gesamtmasse der Getränkesubstanz die Schaumbildung wirksam verhindert wird und gleichzeitig genügend Teesubstanz in der Getränkesubstanz vorhanden ist, um ein qualitativ hochwertiges Teegetränk zu erzeugen. Die Getränkesubstanz kann neben den oben beschriebenen Inhaltsstoffen weitere aromatisierende und färbende Komponenten, wie beispielsweise Zucker, Zuckerkuleur, natürliche Farbstoffe aus Pflanzen, getrocknete wässrige Extrakte von Früchten, Gewürzen und Kräutern, ölige Extrakte und Extrakmischungen von Gewürzen, Kräutern, Schalen von Zitrusfrüchten und anderen Pflanzen- und Pflanzenteilen, Aromastoffe zur Abrundung, Typisierung und Standardisierung oder dergleichen enthalten. Diese Inhaltsstoffe ergeben nach der Zubereitung ein Teegetränk welches dem traditionell zubereiteten Getränk in allen Eigenschaften wie Aroma, Geschmack, Farbe und Aussehen entspricht.

Gemäß einer bevorzugten Ausführungsform der vorliegenden Erfindung ist vorgesehen, dass die Getränkesubstanz Grüntee und/oder Schwarztee umfasst. insbesondere umfasst die Getränkesubstanz insgesamt im Wesentlichen 2 bis 4 Gramm, bevorzugt 2,5 bis 3,5 Gramm und besonders bevorzugt im Wesentlichen 3 Gramm Grüntee- und/oder Schwarztee umfasst.

Die erfindungsgemäße Portionskapsel weist ein Filtervlies auf. Dies hat gegenüber dem Stand der Technik den Vorteil, dass eine Verunreinigung des herzustellenden Teegetränks durch Teilchen der Getränkesubstanz unterbunden wird, wobei gleichzeitig ein effizienteres Aufbrühverhalten der Getränkesubstanz erzielt wird. Die hohe Effizienz des Aufbrühvorgangs ermöglicht vorteilhafterweise ferner eine Reduzierung der benötigten Getränkesubstanzmenge, sowie eine hohe Aufbrühgeschwindigkeit, wodurch sich die Dauer der Getränkebrühprozedur vermindert. Es hat sich in überraschender und nicht vorhersehbarer Weise gezeigt, dass insbesondere mit einer Getränkesubstanz, bei welcher wenigstens 90 Prozent der Getränkesubstanz eine mittlere Teilchengröße zwischen 0,1 und 2 Millimetern aufweist, kombiniert mit einem Filtervlies, ein optimales Verhältnis zwischen Aufbrüheffizienz und Brühgeschwindigkeit einerseits und Filtrationsrate andererseits erreicht wird.

Das Material des Filterfilzes umfasst vorzugsweise Polyester, so dass eine kostengünstige Herstellung und eine hohe Reißfestigkeit erzielbar sind. Das Filterfilz weist insbesondere ein Flächengewicht zwischen 100 und 2000 Gramm pro Quadratmeter, bevorzugt zwischen 400 und 900 Gramm pro Quadratmeter, besonders bevorzugt zwischen 600 und 700 Gramm pro Quadratmeter und ganz besonders bevorzugt von im Wesentlichen 650 Gramm pro Quadratmeter auf. Ferner weist das Filterfilz senkrecht zu seiner Haupterstreckungsebene insbesondere eine Dicke auf, welche zwischen 1,5 und 5,0 Millimeter, bevorzugt zwischen 2 und 4 Millimeter und besonders bevorzugt bei im Wesentlichen 2,8 Millimeter liegt. Optional ist das Filterfilz derart ausgebildet, dass das Filterfilz bei einem Druck von 200 Pa eine Luftdurchlässigkeit zwischen 100 und 1000 l/(dm²-min), bevorzugt zwischen 200 und 300 l/(dm²·min) und bevorzugt von im Wesentlichen 250 l/(dm²·min) aufweist. Das definierte Filterfilz ermöglicht vorteilhafterweise eine schnelle, effiziente und aromatische Extraktion der Getränkesubstanz, ohne dass hierbei Teilchen der Getränkesubstanz aus der Portionskapsel geschwemmt werden und das Getränk somit verunreinigt wird.

Der geschlossene Behälter weist ein im Wesentlichen kegelstumpfförmiges Basiselement mit einem geschlossenen Boden auf, welches auf seiner dem Boden abgewandten Seite mit einer Deckelfolie verschlossen ist, wobei zwischen dem Boden und der Deckelfolie ein Hohlraum zur Aufnahme der Aufbrühsubstanz ausgebildet ist. In vorteilhafter Weise ist die erfindungsgemäße Portionskapsel somit in herkömmlichen Brühkammermaschinen zu betreiben.

Offenbart wird auch ein Verfahren zur Herstellung eines Teegetränks mit einer Portionskapsel, wobei in einem ersten Verfahrensschritt die Portionskapsel in eine Brühkammer einer Brühkammermaschine eingesetzt wird, wobei in einem zweiten Verfahrensschritt Brühwasser in die Portionskapsel eingeleitet wird und die Aufbrühsubstanz mittels des Brühwasser zur Herstellung des Teegetränks aufgebrüht wird und wobei in einem dritten Verfahrensschritt das Teegetränk aus der Portionskapsel abgeführt wird. Durch die Verwendung der erfindungsgemäßen Portionskapsel wird ein im Vergleich zum Stand der Technik qualitativ hochwertigeres Teegetränk in einer vergleichsweise kurzen Brühzeit und ohne Getränkesubstanzrückstände hergestellt.

Es hat sich gezeigt, dass die genannten Vorteile insbesondere dann erzielt werden, wenn ein Extraktgehalt zwischen 1 und 50 Prozent, bevorzugt zwischen 1 und 10 Prozent und besonders bevorzugt zwischen 1 und 3 Prozent eingehalten wird. Der Extraktgehalt wird insbesondere gehalten, indem eine durchschnittliche Teilchengröße D_{4,3} der Getränkesubstanz zwischen 500 Mikrometer und 1500 Mikrometer und bevorzugt zwischen 650 Mikrometer und 1320 Mikrometer vorgesehen wird und/oder ein Anteil von Teilchen in der Getränkesubstanz mit einer Teilchengröße größer als 500 Mikrometer vorgesehen wird, der zwischen 40 Prozent und 90 Prozent und vorzugsweise zwischen 50 und 80 Prozent liegt, und/oder ein Anteil von Teilchen mit einer Teilchengröße kleiner als 100 Mikrometer in der Getränkesubstanz vorgesehen wird, der kleiner als 10 Prozent ist und vorzugsweise kleiner als 8 Prozent ist.

Gemäß einer bevorzugten Ausführungsform des Verfahrens ist vorgesehen, dass im ersten Verfahrensschritt eine Einlassöffnung für das Brühwasser und eine Auslassöffnung für das Teegetränk im geschlossenen Behälter der Portionskapsel erzeugt wird, wobei der geschlossene Behälter vorzugsweise von Perforierungsmitteln der Brühkammermaschine perforiert wird und/oder wobei vorzugsweise eine die Einlass- und/oder Auslassöffnung verdeckende Dichtfolie vom geschlossenen Behälter abgezogen wird. Dies hat den Vorteil, dass die Getränkesubstanz während der Lagerung der Portionskapsel nicht oder nur unwesentlichen Aroma verliert, da die Portionskapsel vor der Öffnung bzw. Herstellung der Einlass- und/oder Auslassöffnung im Wesentlichen hermetisch dicht ist.

Gemäß einer bevorzugten Ausführungsform des Verfahrens ist vorgesehen, dass im zweiten Verfahrensschritt Brühwasser für eine Zeitspanne zwischen 30 und 100 Sekunden, bevorzugt zwischen 50 und 80 Sekunden und besonders bevorzugt zwischen 60 und 70 Sekunden in die Portionskapsel eingeleitet wird. Es hat sich gezeigt, dass auf diese Weise ein Optimum zwischen einer noch vertretbaren Brühdauer und vergleichsweise guten Aufbrühergebnissen sichergestellt werden kann. Der Druck des Brühwassers, das Innenvolumen der Portionskapsel, die Menge der in der Portionskapsel angeordneten Aufbrühsubstanz, die Menge des im zweiten Verfahrensschritt in die Portionskapsel eingeleiteten Brühwasser, die Korngrößenverteilung der Aufbrühsubstanz und/oder der mittlere Lochdurchmesser des Filterelements derart aufeinander abgestimmt sind, dass im dritten Verfahrensschritt eine Menge zwischen 150 und 250 Millilitern, bevorzugt zwischen 180 und 220 Millilitern und besonders bevorzugt von im Wesentlichen 200 Millilitern des Teegetränks aus der Portionskapsel abgeführt wird. Ausführungsbeispiele der Erfindung sind in den Figuren dargestellt und in der nachfolgenden Beschreibung näher erläutert. Die Figuren sind lediglich beispielhaft beschrieben und schränken den allgemeinen Erfindungsgedanken nicht ein.

### Kurze Beschreibung der Figuren

- Figur 1: zeigt eine schematische seitliche Schnittbildansicht einer nichterfindungsgemäßen Portionskapsel.

- Figur 2: zeigt eine schematische seitliche Schnittbildansicht der nichterfindungsgemäßen Portionskapsel während eines Aufbrühvorgangs.
- Figur 3: zeigt eine schematische seitliche Schnittbildansicht einer Portionskapsel aufweisend eine Getränkesubstanz gemäß einer beispielhaften Ausführungsform der vorliegenden Erfindung.
- Figur 4: zeigt eine schematische seitliche Schnittbildansicht der Portionskapsel gemäß einer Ausführungsform der vorliegenden Erfindung während eines Aufbrühvorgangs.

### Ausführungsformen der Erfindung

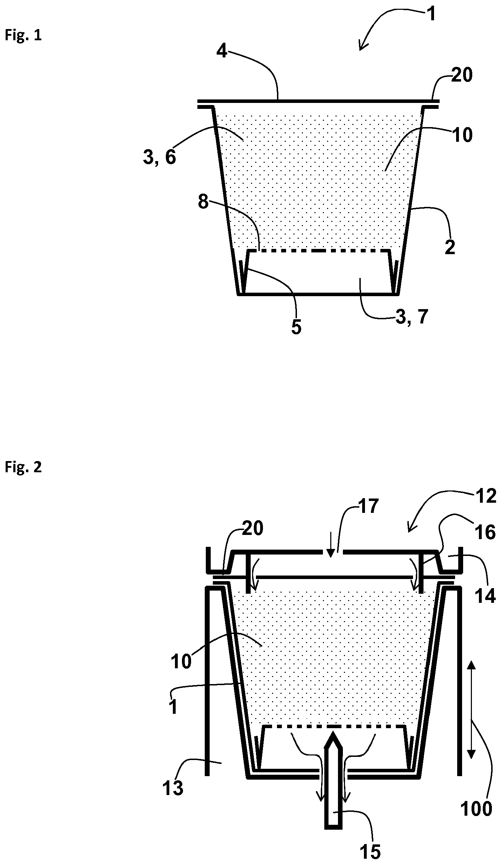

In **Figur 1** ist eine schematische seitliche Schnittbildansicht einer Portionskapsel 1 dargestellt, wobei die Portionskapsel 1 ein im Wesentlichen kegelstumpfförmiges Basiselement 2 aufweist, welches topfähnlich ausgeformt ist und einen Hohlraum 3 umschließt. Der Hohlraum 3 wird von einer Deckelfolie 4 in Form einer Membran verschlossen. Das Basiselement 2 umfasst insbesondere ein weiches oder starres Kunststoffmaterial. Die Deckelfolie 4 umfasst vorzugsweise eine dünne Kunststoff- oder Aluminiumfolie. Das Basiselement 2 weist im Bereich der Membran 4 einen umlaufenden Befestigungsflansch 20 auf, wobei die Membran 4 mit dem Befestigungsflansch 20 stoffschlüssig verbunden, insbesondere verschweißt oder verklebt ist. Innerhalb des Basiselements 2 ist ein Filterelement 5 angeordnet, welches aus einem thermoplastischen Kunststoff, beispielsweise Polypropylen hergestellt ist. Das Filterelement 5 unterteilt den Hohlraum 3 in einen ersten Bereich 6 und in einen zweiten Bereich 7. Der erste Bereich 6 ist zur Aufnahme einer pulverförmigen Getränkesubstanz 10 vorgesehen, welche in den Figuren aus Gründen der Übersichtlichkeit nur schematisch illustriert ist. Die Getränkesubstanz 10 umfasst granulatförmigen Tee. Die Getränkesubstanz 10 wird beispielsweise in den ersten Bereich 6 eingefüllt und anschließend verdichtet, bevor der Hohlraum 3 durch die Deckelfolie 4 verschlossen wird. Der zweite Bereich 7 dient zur Aufnahme und insbesondere zum Sammeln eines nicht abgebildeten Teegetränks während eines Aufbrühvorgangs der Portionskapsel 1. Die Portionskapsel 1 ist dazu vorgesehen, in eine Brühkammer 12 einer in Figur 1 nicht gezeigten Brühkammermaschine eingesetzt zu werden, in welcher dem ersten Bereich 6 eine Aufbrühflüssigkeit (beispielsweise heißes Wasser) vorzugsweise unter hohem Druck zugeführt wird. Diese Aufbrühflüssigkeit wechselwirkt mit der Getränkesubstanz 10, so dass sich ein Teegetränk bildet. Das Filterelement 5 weist eine Mehrzahl von Filteröffnungen 8 auf und fungiert als Filter für das Getränk, wodurch Partikel der Getränkesubstanz 10 aus dem hergestellten Getränk herausgefiltert werden. Das Teegetränk gelangt hierbei durch die Filteröffnungen 8 in den zweiten Bereich 7, während keine Partikel der Getränkesubstanz 10 in den zweiten Bereich 7 gelangen. Der zweite Bereich 7 wird von einem Bodenbereich des Basiselements 2 begrenzt, welcher in der Brühkammer 12 beispielsweise von einem Aufstechdorn der Brühkammermaschine durchstochen wird, um eine Ausgangsöffnung für das Getränk herzustellen. Alternativ ist denkbar, dass sich im Bodenbereich unter dem Druck der Aufbrühflüssigkeit automatisch eine Ausgangsöffnung bildet und/oder dass im Bodenbereich bereits eine Ausgangsöffnung oder eine Ausgangsventil implementiert ist. Die Ausgangsöffnung ist beispielsweise mit einer von Hand abziehbaren Dichtfolie verschlossen, welche von einem Benutzer vor dem Einlegen der Portionskapsel 1 in die Brühkammermaschine von Hand abgezogen wird. Die Getränkesubstanz 10 ist im Wesentlichen granulatförmig ausgebildet und umfasst zumindest teilweise Grüntee und/oder Schwarztee. Denkbar ist jedoch genauso, dass die Getränkesubstanz 10 jede andere Sorte oder Sortenmischung handelsüblichen Tees, wie beispielsweise Früchtetee, Kräutertee, Pfefferminztee, Kamillentee, Hagebuttentee und dergleichen umfasst. Denkbar wäre auch, dass die Getränkesubstanz 10 ein Granulat für Eistee umfasst. Die Korngrößenverteilung des Getränkesubstrats 10 ist ferner derart ausgewählt, dass wenigstens 90 Prozent der Getränkesubstanz 10 eine mittlere Teilchengröße zwischen 0,1 und 2 Millimetern aufweist. Die Korngrößenverteilung ist dabei insbesondere auf einen mittleren Durchmesser der Filteröffnungen 8 abgestimmt, welcher im Wesentlichen zwischen 0,01 und 1 Millimeter umfasst. Das Verhältnis zwischen der Korngrößenverteilung der Getränkesubstanz 10 und dem Durchmesser und Querschnitt der einzelnen Filteröffnungen 8 ist dabei derart ausgewählt, dass nahezu keine Partikel der Getränkesubstanz 10 von dem ersten zum zweiten Bereich 6, 7 gelangen und gleichzeitig ein möglichst schnelles und effizientes Aufbrühen der Getränkesubstanz 10 erzielt wird. Die Gesamtmasse der Getränkesubstanz 10 in der Portionskapsel 1 umfasst vorzugsweise im Wesentlichen 3 Gramm. Die Getränkesubstanz 10 weist ferner eine Schaumbremse auf, welche insbesondere granulatförmig ausgebildet und wenigstens ein Öl umfasst. Die Schaumbremse umfasst dabei vorzugsweise einen Anteil von maximal 1,5 Prozent an der Gesamtmasse der Getränkesubstanz 10. Denkbar ist, dass die Getränkesubstanz 10 zur Keimreduktion thermisch vorbehandelt ist.

Optional oder alternativ ist vorgesehen, dass die Getränkesubstanz 10, wenn sie mit dem Malvern-Laserbeugungsverfahren vermessen wird (beispielsweise mittels eines Malvern Mastersizer 3000 mit Trockendispergierung Aero S, 4 bar Dispersionsdruck und einer Feed Rate von 60 bis 90), eine durchschnittliche Teilchengröße D_{4,3}, zwischen 650 Mikrometer und 1320 Mikrometer aufweist. Ferner weist die Getränkesubstanz 10 einen Anteil von Teilchen mit einer Teilchengröße größer als 500 Mikrometer auf, der zwischen 50 und 80 Prozent liegt, und einen Anteil von Teilchen mit einer Teilchengröße kleiner als 100 Mikrometer auf, der kleiner als 8 Prozent ist. Das spezifische Quellvermögen der Getränkesubstanz 10 liegt zwischen 1,0 und 2,6.

In Figur 2 ist eine schematische seitliche Schnittbildansicht der anhand Figur 1 beschriebenen Portionskapsel 1 während eines Aufbrühvorgangs dargestellt. Die Portionskapsel 1 ist dabei in einer Brühkammer 12 einer Brühkammermaschine angeordnet, welche beispielsweise eine Kaffeemaschine zum Aufbrühen von Kaffee-Portionskapseln sein kann. Die Brühkammer 12 umfasst ein Aufnahmeelement 13 zur Aufnahme der Portionskapsel 1 und ein Verschlusselement 14 zum Verschließen des Aufnahmeelements 13. Die Brühkammer 12 wird durch axiales Verschieben des Verschlusselements 14 relativ zum Aufnahmeelement zwischen einer nicht gezeigten Ladestellung und einer in Figur 2 gezeigten Aufbrühstellung bewegbar. In der Ladestellung sind das Aufnahmeelement 13 und das Verschlusselement 14 voneinander entlang der axialen Richtung 100 beabstandet, so dass die Portionskapsel 1 in die Brühkammer 12 einsetzbar ist bzw. entlang der axialen Richtung 100 zwischen dem Verschlusselement 14 und dem Aufnahmeelement 13 angeordnet werden kann. Anschließend wird das Verschlusselement 14 entlang der axialen Richtung 100 in Richtung Aufnahmeelement 13 bewegt, so dass der Flansch 20 zwischen der Randung des Aufnahmeelements 13 und dem Verschlusselement 14 eingeklemmt wird und somit eine geschlossene Brühkammer 12 gebildet wird. Ferner weisen das Aufnahmeelement 13 einen Dorn 15 und das Verschlusselement 14 eine Mehrzahl von Perforierungsspitzen 16 auf. Beim Schließen der Brühkammer 12 wird mittels des Dorns 15 der Bodenbereich der Portionskapsel 1 und mittels der Perforierungsspitzen 16 die Deckelfolie 4 perforiert. Das Verschlusselement 14 weist eine Flüssigkeitszuführöffnung 17 auf, durch welche die Aufbrühflüssigkeit in Form von druckbeaufschlagten, heißen oder kalten Wasser dem ersten Bereich 6 der Portionskapsel 1 zugeführt wird. Das Brühwasser wird dabei für eine Zeitspanne zwischen 60 und 70 Sekunden in die Portionskapsel 1 eingeleitet. Die Aufbrühflüssigkeit gelangt dabei durch die mittels der Perforierungsspitzen 16 in der Deckelfolie 4 erzeugten Perforationslöcher in die Portionskapsel 1. Innerhalb des ersten Bereichs 6 wechselwirkt die Aufbrühflüssigkeit mit der Getränkesubstanz 10, wodurch sich ein Teegetränk bildet bzw. aufgebrüht wird, welches durch die Filteröffnungen 8 des Filterelements 5 in den zweiten Bereich 7 gelangt. Das Teegetränk wird ferner durch das mittels des Dorns 15 im Bodenbereich erzeugte Ausgangsloch aus dem zweiten Bereich 7 abgeleitet und anschließend einem nicht dargestellten Getränkegefäß, wie beispielsweise einer Teetasse oder -kanne zugeführt. Insbesondere wird dem Getränkegefäß in einem einzigen Aufbrühvorgang eine Menge von im Wesentlichen 200 Milliliter Teegetränk zugeführt. Der Extraktgehalt liegt hierbei insbesondere zwischen 1 und 3 Prozent. Nach Beendigung des Aufbrühvorgangs wird das Verschlusselement 14 von dem Aufnahmeelement 13 wieder beabstandet, so dass die verbrauchte Portionskapsel 1 entnommen oder automatisch ausgeworfen werden kann und die Brühkammermaschine gegebenenfalls mit einer neuen Portionskapsel 1 befüllt werden kann.

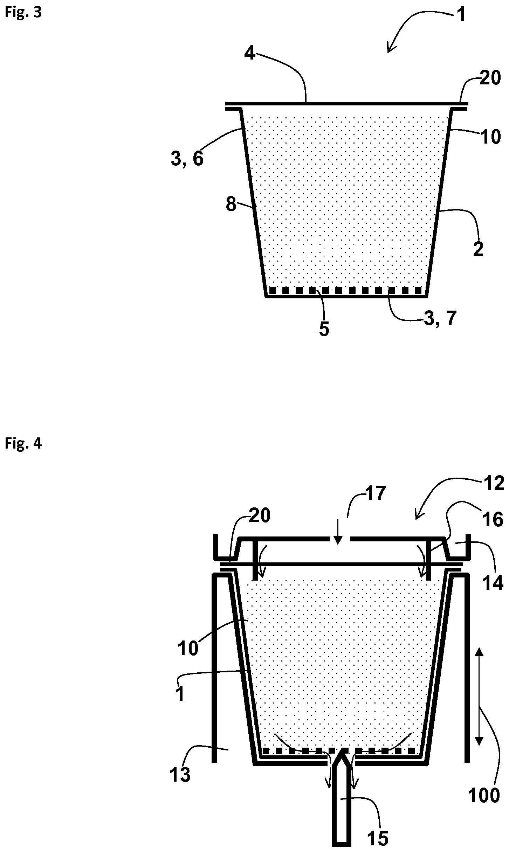

In **Figur 3** ist eine schematische seitliche Schnittbildansicht einer Portionskapsel 1 aufweisend eine Getränkesubstanz 10 gemäß einer beispielhaften Ausführungsform der vorliegenden Erfindung dargestellt, wobei die Portionskapsel 1 im Wesentlichen der in Figur 1 illustrierten Portionskapsel 1 gleicht und als Unterschied lediglich das Filterelement 5 als Filterfilz ausgebildet ist. Die Getränkesubstanz 10 entspricht insbesondere der im Zusammenhang mit Figuren 1 und 2 beschriebenen Getränkesubstanz 10.

Das Material des Filterfilzes umfasst vorzugsweise Polyester. Das Filterfilz weist ein Flächengewicht zwischen 600 und 700 Gramm pro Quadratmeter und insbesondere von im Wesentlichen 650 Gramm pro Quadratmeter auf. Die Dicke des Filterfilzes senkrecht zu seiner Haupterstreckungsebene liegt bei im Wesentlichen 2,8 Millimeter liegt. Bei einem Druck von 200 Pa weist das Filterfilz vorzugsweise eine Luftdurchlässigkeit von im Wesentlichen 250 l/ dm²·min auf.

In **Figur 4** ist eine schematische seitliche Schnittbildansicht der anhand Figur 3 beschriebenen Portionskapsel 1 während eines Aufbrühvorgangs dargestellt, wobei-ähnlich wie bei Figur 2 - der Dorn von unten den Kapselboden durchsticht. Im vorliegenden Beispiel tritt die Dornspitze jedoch in das Filterfilz ein, so dass das Getränk aus der Portionskapsel 1 abfließen kann. Der Extraktgehalt liegt hierbei insbesondere ebenfalls zwischen 1 und 3 Prozent. Denkbar ist auch, dass die Dornspitze das Filterfilz vollständig durchsticht und/oder das Filterfilz im Bereich der Dornspitze leicht angehoben wird. Durch die Querströmung innerhalb des Filterfilz (parallel zur Haupterstreckungsebene des Filterfilz) wird ein effizientes Abfließen des Getränks ermöglicht, wobei die einzelnen Partikel der Getränkesubstanz durch das Filterfilz herausgefiltert werden und somit das abfließende Getränk nicht verunreinigen.

### Bezugszeichenliste

- 1: Portionskapsel
- 2: Basiselement
- 3: Hohlraum
- 4: Deckelfolie
- 5: Filterelement
- 6: Erster Bereich
- 7: Zweiter Bereich
- 8: Filteröffnungen
- 10: Getränkesubstanz
- 10': Aufbrühsubstanz
- 11: Teegetränk
- 12: Brühkammer
- 13: Aufnahmeelement
- 14: Verschlusselement
- 15: Dorn
- 16: Perforierungsspitzen
- 17: Flüssigkeitszuführöffnung
- 20: Flansch
- 100: Axiale Richtung

## Patentansprüche

1. Portionskapsel (1) zur Herstellung eines Teegetränks (12) aufweisend einen im Wesentlichen geschlossenen Behälter, der zumindest teilweise mit einer zum Aufbrühen vorgesehenen Aufbrühsubstanz (10') befüllt ist, wobei die Portionskapsel (1) zum Aufbrühen der Aufbrühsubstanz (10') in eine Brühkammermaschine (13, 15) einsetzbar ist, wobei der geschlossene Behälter ein im Wesentlichen kegelstumpfförmiges Basiselement (2) mit einem geschlossenen Boden aufweist, welches auf seiner dem Boden abgewandten Seite mit einer Deckelfolie (4) verschlossen ist, wobei zwischen dem Boden und der Deckelfolie (4) ein Hohlraum zur Aufnahme der Aufbrühsubstanz (10') ausgebildet ist, wobei die Portionskapsel (1) ein Filterelement (5) aufweist, **dadurch gekennzeichnet, dass** das Filterelement (5) ein Filtervlies umfasst und dass die Aufbrühsubstanz (10') eine Getränkesubstanz (10) zur Herstellung eines Teegetränks (12) umfasst, wobei die Getränkesubstanz (10) zur Aufbewahrung in der Portionskapsel (1) und zum Aufbrühen in der Portionskapsel (1) mittels in die Portionskapsel (1) unter Druck eingeleitetem Heißwasser vorgesehen ist, wobei die Getränkesubstanz (10) im Wesentlichen teilchenförmig ausgebildet ist und zumindest teilweise Tee umfasst, wobei die Getränkesubstanz (10) eine durchschnittliche Teilchengröße (D_{4,3}) zwischen 500 Mikrometer und 1500 Mikrometer aufweist.

2. Portionskapsel (1) nach Anspruch 1, wobei die Getränkesubstanz (10) eine durchschnittliche Teilchengröße (D_{4,3}) zwischen 650 Mikrometer und 1320 Mikrometer aufweist.

3. Portionskapsel (1) nach einem der vorhergehenden Ansprüche, wobei die Getränkesubstanz (10) einen Anteil von Teilchen mit einer Teilchengröße größer als 500 Mikrometer aufweist, der zwischen 40 Prozent und 90 Prozent und vorzugsweise zwischen 50 und 80 Prozent liegt.

4. Portionskapsel (1) nach einem der vorhergehenden Ansprüche, wobei die Getränkesubstanz (10) einen Anteil von Teilchen mit einer Teilchengröße kleiner als 100 Mikrometer aufweist, der kleiner als 10 Prozent ist und vorzugsweise kleiner als 8 Prozent ist.

5. Portionskapsel (1) nach einem der vorhergehenden Ansprüche, wobei die Getränkesubstanz (10) ein spezifisches Quellvermögen zwischen 1,5 und 3 und insbesondere zwischen 1,0 und 2,6 aufweist.

6. Portionskapsel (1) nach einem der vorhergehenden Ansprüche, wobei die Getränkesubstanz (10) zur Keimreduktion thermisch vorbehandelt ist.

7. Portionskapsel (1) nach einem der vorhergehenden Ansprüche, wobei wenigstens 90 Prozent der Getränkesubstanz (10) eine mittlere Teilchengröße zwischen 0,1 und 2 Millimetern aufweist.

8. Portionskapsel (1) nach einem der vorhergehenden Ansprüche, , dass die Getränkesubstanz (10) eine Schaumbremse umfasst.

9. Portionskapsel (1) nach Anspruch 8, wobei die Schaumbremse ein Pflanzenöl umfasst.

10. Portionskapsel (1) nach einem der Ansprüche 8 oder 9, wobei die Schaumbremse maximal 5 Prozent, bevorzugt maximal 2 Prozent und besonders bevorzugt maximal 1,5 Prozent der Getränkesubstanz (10) umfasst.

11. Portionskapsel (1) nach einem der vorhergehenden Ansprüche, wobei, dass die Getränkesubstanz (10) Grüntee und/oder Schwarztee umfasst.

12. Portionskapsel (1) nach einem der vorhergehenden Ansprüche, wobei die Getränkesubstanz (10) im Wesentlichen 2 bis 4 Gramm, bevorzugt 2,5 bis 3,5 Gramm und besonders bevorzugt im Wesentlichen 3 Gramm Grüntee und/oder Schwarztee umfasst.

## Claims

1. Portion capsule (1) for producing a tea beverage (12), said portion capsule having a substantially closed container which is filled at least in part with a brewing substance (10') which is provided for the brewing process, wherein for brewing the brewing substance (10') the portion capsule (1) can be inserted into a brewing chamber machine (13, 15), wherein the closed container has a substantially truncated-cone-shaped base element (2) with a closed bottom which is sealed on its side remote from the bottom by means of a covering foil (4), wherein a hollow space for accommodating the brewing substance (10') is realized between the bottom and the covering foil (4), wherein the portion capsule (1) has a filter element (5), **characterized in that** the filter element (5) comprises a filter fleece and **in that** the brewing substance (10') comprises a beverage substance (10) for producing a tea beverage (12), wherein the beverage substance (10) is provided to be stored in the portion capsule (1) and to be brewed in the portion capsule (1) by means of hot water introduced into the portion capsule (1) under pressure, wherein the beverage substance (10) is substantially particulate and comprises tea at least in part, wherein the beverage substance (10) has an average particle size (D_{4,3}) of between 500 micrometers and 1500 micrometers.

2. Portion capsule (1) according to Claim 1, wherein the beverage substance (10) has an average particle size (D_{4,3}) of between 650 micrometers and 1320 micrometers.

3. Portion capsule (1) according to one of the preceding claims, wherein the beverage substance (10) has a proportion of particles with a particle size greater than 500 micrometers which is between 40 percent and 90 percent and is preferably between 50 and 80 percent.

4. Portion capsule (1) according to one of the preceding claims, wherein the beverage substance (10) has a proportion of particles with a particle size smaller than 100 micrometers which is smaller than 10 percent and is preferably smaller than 8 percent.

5. Portion capsule (1) according to one of the preceding claims, wherein the beverage substance (10) has a specific swelling capacity of between 1.5 and 3 and in particular between 1.0 and 2.6.

6. Portion capsule (1) according to one of the preceding claims, wherein the beverage substance (10) is thermally preheated to reduce germs.

7. Portion capsule (1) according to one of the preceding claims, wherein at least 90 percent of the beverage substance (10) has a median particle size of between 0.1 and 2 millimeters.

8. Portion capsule (1) according to one of the preceding claims, wherein the beverage substance (10) comprises an anti-foaming means.

9. Portion capsule (1) according to Claim 8, wherein the anti-foaming means comprises a vegetable oil.

10. Portion capsule (1) according to either of Claims 8 or 9, wherein the anti-foaming means comprises a maximum of 5 percent, in a preferred manner a maximum of 2 percent and in a particularly preferred manner a maximum of 1.5 percent of the beverage substance (10).

11. Portion capsule (1) according to one of the preceding claims, wherein the beverage substance (10) comprises green tea and/or black tea.

12. Portion capsule (1) according to one of the preceding claims, wherein the beverage substance (10) comprises substantially between 2 and 4 grams, in a preferred manner between 2.5 and 3.5 grams and in a particularly preferred manner substantially 3 grams of green tea and/or black tea.

## Revendications

1. Capsule-dosette (1) pour préparer une boisson à base de thé (12), comprenant un récipient essentiellement fermé, lequel est rempli au moins partiellement d'une substance à infuser (10') prévue pour être infusée, la capsule-dosette (1) pouvant être insérée dans une machine à chambre d'infusion (13, 15) pour l'infusion de la substance à infuser (10'), le récipient fermé comprenant un élément de base (2) essentiellement de forme tronconique présentant un fond fermé, lequel élément de base est fermé par un film de recouvrement (4) sur son côté opposé au fond, un espace creux destiné à recevoir la substance à infuser (10') étant réalisé entre le fond et le film de recouvrement (4), la capsule-dosette (1) comprenant un élément de filtre (5), **caractérisée en ce que** l'élément de filtre (5) comporte une nappe filtrante, et **en ce que** la substance à infuser (10') comporte une substance pour boisson (10) pour préparer une boisson à base de thé (12), la substance pour boisson (10) étant prévue pour être conservée dans la capsule-dosette (1) et pour être infusée dans la capsule-dosette (1) au moyen d'eau chaude introduite sous pression dans la capsule-dosette (1), la substance pour boisson (10) étant réalisée essentiellement sous forme particulaire et comportant au moins partiellement du thé, la substance pour boisson (10) présentant une taille moyenne de particule (D_{4,3}) entre 500 micromètres et 1500 micromètres.

2. Capsule-dosette (1) selon la revendication 1, dans laquelle la substance pour boisson (10) présente une taille moyenne de particule (D_{4,3}) entre 650 micromètres et 1320 micromètres.

3. Capsule-dosette (1) selon l'une quelconque des revendications précédentes, dans laquelle la substance pour boisson (10) présente une proportion de particules présentant une taille de particule supérieure à 500 micromètres qui se situe entre 40 pour cent et 90 pour cent et de préférence entre 50 et 80 pour cent.

4. Capsule-dosette (1) selon l'une quelconque des revendications précédentes, dans laquelle la substance pour boisson (10) présente une proportion de particules présentant une taille de particule inférieure à 100 micromètres qui est inférieure à 10 pour cent et de préférence est inférieure à 8 pour cent.

5. Capsule-dosette (1) selon l'une quelconque des revendications précédentes, dans laquelle la substance pour boisson (10) présente une capacité de gonflement spécifique entre 1,5 et 3, et en particulier entre 1,0 et 2,6.

6. Capsule-dosette (1) selon l'une quelconque des revendications précédentes, dans laquelle la substance pour boisson (10) est prétraitée thermiquement en vue de la réduction des germes.

7. Capsule-dosette (1) selon l'une quelconque des revendications précédentes, dans laquelle au moins 90 pour cent de la substance pour boisson (10) présentent une taille moyenne de particule entre 0,1 et 2 millimètres.

8. Capsule-dosette (1) selon l'une quelconque des revendications précédentes, dans laquelle la substance pour boisson (10) comporte un agent antimousse.

9. Capsule-dosette (1) selon la revendication 8, dans laquelle l'agent antimousse comporte une huile végétale.

10. Capsule-dosette (1) selon l'une quelconque des revendications 8 ou 9, dans laquelle l'agent antimousse comporte au maximum 5 pour cent, de préférence au maximum 2 pour cent et de manière particulièrement préférée au maximum 1,5 pour cent de la substance pour boisson (10).

11. Capsule-dosette (1) selon l'une quelconque des revendications précédentes, dans laquelle la substance pour boisson (10) comporte du thé vert et/ou du thé noir.

12. Capsule-dosette (1) selon l'une quelconque des revendications précédentes, dans laquelle la substance pour boisson (10) comporte essentiellement 2 à 4 grammes, de préférence 2,5 à 3,5 grammes et de manière particulièrement préférée essentiellement 3 grammes de thé vert et/ou de thé noir.
